# FASCICULE DE BREVET EUROPEEN

(11) **EP 0 349 374 B1**
(45) Date de publication et mention de la délivrance du brevet: **10.01.1996**
(21) Numéro de dépôt: 89401701.1
(22) Date de dépôt: 16.06.1989
(51) Int. Cl.: G01N 7/00

(54) **Procédé et dispositif de mesure pour determiner une caractéristique de pompage ou un paramètre d'un fluide**
Verfahren und Vorrichtung zur Ermittlung einer Pumpeigenschaft oder eines Parameters eines Fluids
Method and apparatus for determining a pumping characteristic or a parameter of a fluid

(30) Priorité: 30.06.1988 FR 8808886
(43) Date de publication de la demande: 03.01.1990
(73) Titulaire: INSTITUT FRANCAIS DU PETROLE, F-92502 Rueil-Malmaison (FR)
(72) Inventeur: Castel, Yvon, F-78290 Croissy sur Seine (FR)
(74) Mandataire: Lewald, Dietrich, Dipl.-Ing.

(56) Documents cités:
- WO-A-87/05107
- US-A- 3 103 809
- US-A- 3 528 440
- US-A- 4 543 819

## Description

L'invention concerne un dispositif et un procédé de mesure pour déterminer les quantités de gaz et de liquide dans un fluide à l'aide d'une variation de volume dans une pompe volumétrique, ainsi qu'éventuellement des caractéristiques physiques, ou des valeurs de ces caractéristiques, du fluide soumis à cette variation de volume.

L'invention s'applique, en particulier à la production d'hydrocarbures comprenant un mélange polyphasique gaz-liquide, cette production pouvant notamment, mais non exclusivement, être réalisée dans un environnement d'accès difficile, par exemple au niveau d'une tête de puits ou d'une ligne de transfert sous-marines, ou encore dans la forêt vierge.

L'invention s'applique aussi à l'industrie chimique et pétrolière ou d'une manière générale à toutes les industries employant des fluides polyphasiques.

L'invention s'applique avantageusement au transfert des fluides polyphasiques, notamment lorsque ce transfert est effectué au moyen d'une pompe volumétrique.

Il est connu d'effectuer des mesures physiques d'un fluide comportant une phase liquide et une phase gazeuse, en vue de déterminer la quantitié relative de chaque phase. Cependant, ces mesures sont produites à partir d'un échantillon qui en général n'est pas représentatif du fluide. Ces mesures sont réalisées en laboratoire ce qui nécessite un certain délai avant que l'on puisse disposer des résultats. Ces mesures sont obtenues, par exemple, au cours de distillations, de variations de pression ou de température.

Ainsi le document US-4,700,561 décrit un procédé et un appareil adaptés à mesurer la proportion de gaz sur un échantillon isolé d'un fluide comportant une phase liquide ou une phase liquide contenant des particules en suspension.

On appelle GLR, ou valeur du paramètre GLR, la valeur du rapport du volume de gaz au volume de liquide d'un fluide, ce rapport étant donné dans des conditions de pression et de température fixées.

On appelle valeur d'une caractéristique le nombre qui quantifie une des caractéristiques d'un phénomène physique. L'ensemble des caractéristiques traduit mathématiquement toutes les configurations possibles d'un phénomène.

Pour remédier aux inconvénients des techniques antérieures citées, la présente invention propose un procédé et un dispositif permettant notammant d'obtenir le GLR.

Selon l'invention on produit une variation de volume et on mesure une ou plusieurs valeurs d'une ou des cractéristiques de cette variation de volume pour déterminer le GLR et/ou d'autres caractéristiques physiques liées à cette variation de volume.

L'invention tire profit du fait que l'on a remarqué qu'un fluide, comportant une phase liquide et une phase gazeuse, qui est soumis à une variation de volume, en l'occurence une compression dans une pompe volumétrique, telle une pompe à piston, présente un certain nombre de caractéristiques de phénomènes physiques facilement mesurables ayant une évolution directement en rapport avec le paramètre GLR.

En effet, par exemple, l'évolution de la pression du fluide dans la chambre de la pompe, en fonction du volume de la chambre dépend du GLR. De même, le travail nécessaire pour réaliser une certaine augmentation de pression ou une certaine diminution de volume dépend du GLR.

Parmi l'ensemble des caractéristiques de phénomènes physiques qui interviennent conjointement avec une variation de volume d'un fluide polyphasique, on peut citer : les pressions d'aspiration et de refoulement, les températures du fluide à l'aspiration et au refoulement, la solubilité de la phase gazeuse dans la phase liquide.

De plus, on a remarqué que pratiquement une augmentation de pression d'un fluide à GLR faible correspond à une évolution isotherme du gaz, alors qu'une augmentation de pression d'un fluide à GLR élevé correspond à une évolution adiabatique du gaz.

L'invention fournit donc un procédé de mesure pour déterminer en cours de pompage au moins une caractéristique de pompage ou un paramètre d'un fluide ayant au moins une phase liquide et une phase gazeuse, le volume de la phase gazeuse rapporté au volume de la phase liquide définissant un paramètre dit GLR, dans lequel on effectue les étapes suivantes :
- on introduit ledit fluide dans une chambre d'une pompe volumétrique, ladite pompe ayant une pression d'aspiration (Pa), et une pression de refoulement (Pr), ladite chambre ayant un volume (V) variable,
- on produit une variation du volume de ladite chambre,
- on établit préalablement, au moins une relation ou un ensemble de courbes entre des caractéristiques physiques associées à ladite variation de volume et en rapport avec ledit paramètre GLR, lesdites caractéristiques prenant chacune des valeurs au cours de la variation de volume,
- au cours de ladite variation de volume et pour ladite variation de volume on mesure au moins une desdites valeurs d'une desdites caractéristiques, et
- à partir de ladite relation et de ladite valeur mesurée, on détermine d'autres valeurs des caractéristiques en rapport avec ledit paramètre GLR et/ou ledit paramètre GLR.

L'une au moins des caractéristiques pourra être choisie parmi :
- une pression règnant dans ladite chambre de pompage,
- une énergie produisant une variation de volume, et
- au moins un volume de la chambre de pompage.

On pourra établir la relation en réalisant un étalonnage à partir d'un échantillon du fluide.

On pourra utiliser comme pompe volumétrique une pompe à piston.

On pourra mesurer la pression et/ou une température d'aspiration et/ou de refoulement de la pompe.

On pourra utiliser un dispositif automatique pour mémoriser la relation et pour déterminer au moins une des valeurs qui n'a pas été mesurée et/ou le paramètre GLR, La détermination étant réalisée par introduction des valeurs mesurées dans le dispositif automatique.

La relation pourra être une fonction continue.

Connaissant les masses volumiques respectives de la phase liquide et de la phase gazeuse, on pourra déterminer le débit massique du fluide transitant dans la chambre de la pompe.

La chambre ayant au moins une paroi mobile, on pourra déterminer le volume de la chambre à partir de la position de la paroi mobile.

La variation de volume pourra être une diminution de volume.

Pour un volume donné de la chambre, on pourra mesurer la valeur associée de la pression, de manière à déterminer un paramètre représentatif, au moins partiellement, de la composition fluide, tel le paramètre GLR.

Pour un volume donné de la chambre, on pourra mesurer la valeur de l'énergie de manière à déterminer un paramètre représentatif, au moins partiellement, de la composition du fluide.

Pour une valeur donnée de la pression dans la chambre, on pourra mesurer la valeur du volume associé, de manière à déterminer un paramètre représentatif, au moins partiellement, de la composition du fluide, et/ou la valeur de l'énergie requise pour obtenir la valeur donnée de la pression.

Le paramètre représentatif au moins partiellement de la composition du fluide peut être le GLR.

L'invention propose en outre un dispositif de mesure pour déterminer au moins une caractéristique de pompage, ou un paramètre, d'un fluide polyphasique ayant au moins une phase liquide et une phase gazeuse, le paramètre étant un paramètre dit GLR qui correspond au rapport du volume de la phase gazeuse au volume de la phase liquide, ledit dispositif comportant une pompe volumétrique (1) de transport du fluide ayant une pression d'aspiration (Pa) et une pression de refoulement (Pr), et comportant une chambre (2) ayant un volume variable et ledit dispositif comportant un dispositif de traitement, comprenant ou capable d'établir et/ou de mémoriser une relation entre des caractéristique de phénomènes physiques associés à ladite variation de volume de la chambre et en rapport avec ledit paramètre GLR ledit dispositif comportant en outre au moins deux des éléments du groupe suivant :
- un capteur (42) de pression (Pc) dans ladite chambre,
- un détecteur adapté à mesurer un travail (Wc) de pompage, et
- des moyens (40, 41) permettant de connaître les variations de volume (Vc) de la chambre,
lesdits éléments fournissant chacun une valeur, ladite caractéristique à déterminer étant une caractéristique qui n'est pas mesurée par ledit dispositif, ledit dispositif de traitement permettant de déterminer ladite caractéristique à partir de la valeur fournie par lesdits éléments et de ladite relation.

La chambre ayant au moins une paroi mobile, le capteur de volume de la chambre pourra être un capteur de position de la paroi mobile.

Le capteur de position pourra être un capteur linéaire.

Le capteur de position pourra être un capteur angulaire.

On pourra utiliser la pompe volumétrique employée dans le procédé selon l'invention, ou faisant partie du dispositif selon l'invention pour le transport de fluide dans un conduit.

On pourra appliquer le procédé ou le dispositif à la détermination des caractéristiques de pompage ou du paramètre dit GLR d'un fluide comportant au moins des hydrocarbures.

L'invention sera bien comprise à la lecture de la description d'un exemple de réalisation non limitatif illustré par les figures annexées, parmi lesquelles :
- La figure 1 représente une influence du GLR d'un fluide sur l'évolution de la pression en fonction d'une compression de volume pour une pompe à piston, et
- La figure 2 représente une pompe à piston équipée du dispositif selon l'invention.

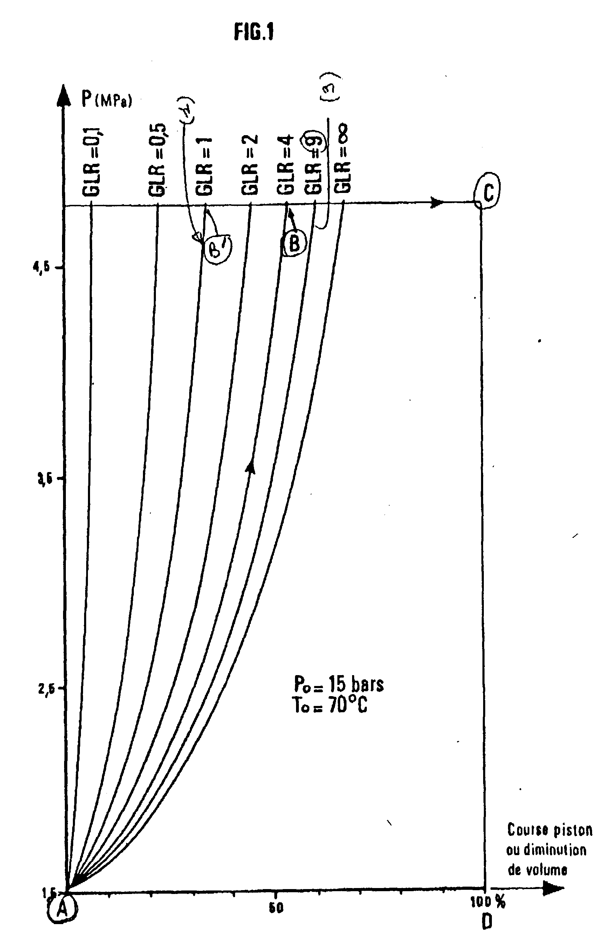

La figure 1 représente l'évolution de la pression au sein d'un fluide en fonction de la variation de volume d'une pompe à piston pour différents GLR d'un fluide. Le fluide qui est un fluide polyphasique comporte une phase gazeuse consistant en un gaz parfait et une phase liquide consistant en un liquide incompressible de viscosité et de poids négligeables entièrement insoluble avec le gaz parfait.

Les valeurs de la pression absolue sont indiquées en ordonnée, alors que la course du piston ou la variation du volume de la chambre au cours de la séquence de pompage est indiquée en abscisse par une échelle relative 0-100 %.

Comme la pompe volumétrique considérée est une pompe à piston à déplacement linéaire, et que, par conséquent, la surface de la partie mobile de la chambre a une aire constante, on peut considérer que la variation de volume de la chambre est proportionnelle à la course du piston.

En considérant, notamment, la loi des gaz parfaits PVg = nRTg devenant PVg = constante dans le cas d'une transformation isotherme, P étant la pression auquel est soumis le volume de gaz Vg à la température Tg absolue du gaz, R étant la constante des gaz parfaits, le volume de liquide VI invariable, le GLR défini dans les conditions initiales de compression par le rapport du volume de gaz au volume de liquide GLR = Vg/Vl, le volume de la chambre de pompage Vc = Vg + VI à chaque moment du pompage, la pression initiale Po égale à 1,5 MPa et la température égale à la température initiale To de 70°C soit sensiblement 343 K, on obtient par le calcul le réseau de courbes de la figure 1.

Pour un GLR donné, par exemple GLR = 4, l'évolution des caractéristiques du pompage, telles la pression et le volume, est figurée par la courbe AB, puis par le segment BC. La courbe AB correspond à une séquence de compression, alors que le segment BC correspond à un transfert du fluide de la chambre de compression à un réservoir ou une conduite dont la pression est maintenue constante. En vue, notamment d'empêcher tout retour de fluide, la pompe est pourvue d'un clapet ayant une pression d'ouverture. Cette pression d'ouverture est égale à la pression de refoulement de la pompe.

L'aire de la surface délimitée par la courbe AB et les segments BC, CD, et DA est proportionnelle au travail nécessaire pour produire le pompage du fluide ayant, pour cette position du point B sur l'isobare passant par le point C, un GLR = 4. On remarque donc que le travail de pompage, pour des conditions de pression d'aspiration et de refoulement données, une température initiale donnée, etc, est une fonction strictement décroissante du GLR.

Selon l'invention, si on ne connait pas la pression d'aspiration Po et la température du fluide à l'aspiration, on les mesure pour déterminer le réseau de courbes dépendant du GLR (ou plus généralement d'un paramètre représentatif, au moins partiellement, de la composition du fluide), soit par le calcul comme pour les courbes représentées à la figure 1, soit par des mesures physiques, soit par ces deux moyens à la fois. Pour les courbes obtenues par calcul, d'autres paramètres interférants peuvent être introduits pour la détermination de celles-ci, par exemple des paramètres relatifs à la solubilité du gaz dans le liquide, à la compressibilité du liquide, au changement d'état, au comportement réel du gaz.

Pour déterminer les courbes, on peut aussi tenir compte des échanges thermiques et dynamiques entre les phases liquide et gazeuse dans la chambre de pompage.

Connaissant l'évolution des caractéristiques de pression, de variation de volume ou de course de piston, pour différents paramètres GLR, et pour une pompe donnée, il est possible à partir d'une ou plusieurs mesure(s) de déterminer une caractéristique ou le paramètre GLR.

Un intérêt particulier de l'invention est de déterminer le GLR. Pour cela, il suffit de déterminer la valeur de la pression pour une valeur de course donnée du piston, ou la valeur de la course du piston pour obtenir une valeur de pression donnée, ou la valeur de la course pour laquelle le transfert du fluide est effectué, ou la variation de pression associée à une variation de course, ou la valeur du travail fourni pour obtenir une valeur donnée de la pression ou de la course, ou les valeurs de la pression ou de la course pour obtenir un travail donné....

Cette détermination du GLR peut être effectuée au moyen d'un graphique, au moyen d'un logiciel de calcul, ou au moyen d'un microprocesseur dans lesquels sont inscrites les relations liant les différents paramètres et caractéristiques, soit sous forme discrète, soit sous forme continue, ou encore par lecture d'une mesure corrigée comme cela peut se faire après un étalonnage et avec l'utilisation d'un seul capteur. Ainsi, à une mesure de la valeur de la course nécessaire pour obtenir une certaine pression correspond une valeur du GLR.

Selon une variante du procédé selon l'invention, si l'on effectue plusieurs mesures différentes, telles deux mesures de la pression associées à deux mesures de la course, il est possible de déterminer une valeur inconnue caractéristique. On peut ainsi déterminer la température d'aspiration.

Selon l'invention on peut utiliser toutes les sortes de pompes volumétriques, comme par exemple : les pompes à piston linéaire, les pompes à piston rotatif, les pompes à engrenages internes ou externes, les pompes à lobes, les pompes à palettes pivotantes ou glissantes, les pompes à vis, à came et piston....

Selon l'invention, la connaissance ou la mesure du travail pour obtenir une certaine variation de volume du fluide permet de déterminer le paramètre GLR ou une autre caractéristique de compression inconnue. Ce travail de pompage peut être déterminé à partir de la mesure de l'énergie consommée par l'organe moteur de la pompe et de la valeur du rendement mécanique de la pompe.

Pour une pompe à piston linéaire produisant une augmentation de la pression d'une certaine masse de fluide, l'énergie de pompage correspond à l'énergie absorbée par la pompe pour augmenter la pression, du fluide, mais pas à l'énergie absorbée par la pompe pour introduire le fluide dans la chambre. Pour permettre des mesures de l'énergie de compression, on pourra équiper la chambre de capteurs de pression ou de capteurs de déplacement du piston.

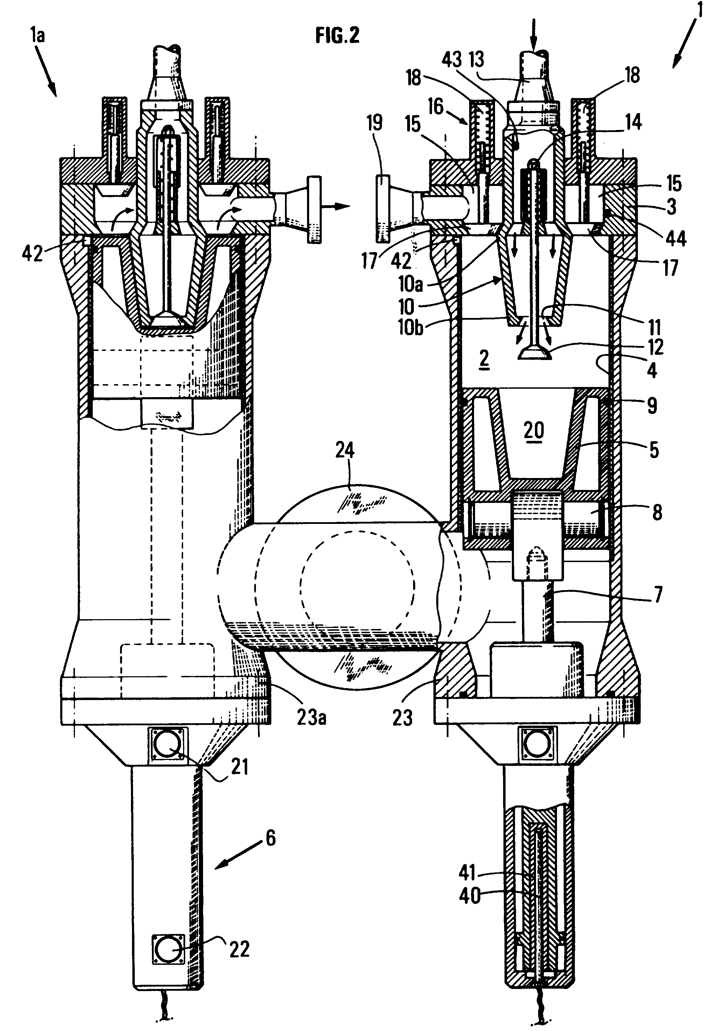

La figure 2 représente un groupe de pompage d'effluents pétroliers pourvu du dispositif de mesure selon l'invention pour permettre la mise en oeuvre du procédé précédemment décrit.

La référence 1 désigne dans son ensemble un premier élément de pompage comportant le dispositif selon l'invention, la référence 1a étant relative à un deuxième élément de pompage de ce groupe identique au premier élément.

Cet élément de pompage 1 comporte une chambre 2 délimitée par une culasse 3, un cylindre 4 et un piston 5. Le piston 5 coulisse dans le cylindre 4 au moyen d'un vérin 6 accouplé par la tige 7 au vérin 6 et un axe 8. Le piston comporte des moyens d'étanchéité 9, tels des segments, ou des joints à lèvres utilisés, par exemple, sur les pistons de pompe à boue, qui coopèrent avec le cylindre 4 pour assurer la compression du fluide. La culasse 3 comporte une saillie 10 située sur l'axe du cylindre, cette saillie ayant une forme tronconique évasée à sa base 10a et un orifice d'alimentation 11 en fluide, à son sommet 10b. L'orifice d'alimentation 11 comporte un siège qui est obturé par une soupape 12 au cours de la phase de remplissage de la chambre 2, de manière à y laisser penêtrer le fluide provenant du conduit d'alimentation 13.

Le fluide pénètre dans la chambre du fait de la différence des forces de pression existantes de part et d'autre de la soupape 12 et qui est suffisante pour s'opposer au moyen de rappel 14 de la soupape 12. Le fluide, qui est compressé par diminution du volume de la chambre 2, s'échappe de la chambre 2 au travers de quatre orifices d'évacuation 15 pourvus de clapets anti-retour 16 comportant des soupapes 17 qui coopèrent avec des sièges solidaires de la culasse et des ressorts 18 assurant l'obturation des orifices d'évacuation au cours de la phase d'alimentation de la chambre 2. Les orifices d'évacuation 15 sont reliés à une conduite d'évacuation 19.

Au cours de la réduction du volume de la chambre 2, la saillie 10 pénètre dans le logement 20 du piston de manière à produire un jet de fluide dirigé vers les orifices d'évacuation 15. Les formes sensiblement complémentaires et tronconiques du logement 20 et de la saillie 10 permettent la production d'un jet à haute vitesse sur les parois du logement 20 du piston 5, de la culasse 3 (notamment de sa saillie 10) et du cylindre 4, de manière à faciliter l'évacuation du fluide et le nettoyage des dépôts qui s'y incrusteraient faute de cette disposition avantageuse. La disposition centrale de la saillie 10 et du logement 20 permet en outre une répartition du fluide, favorable à sa compression, dès son introduction dans la chambre.

Le vérin 6 est relié au travers de deux orifices 21 et 22 à des générateurs hydrauliques adaptés à produire les mouvements du vérin et les variations de volume de la chambre 2.

L'élément 1 du dispositif de pompage comporte en outre un carter, désigné dans son ensemble par la référence 23, qui enveloppe l'espace balayé par le piston 5 et opposé à la chambre 2 par rapport au piston 5, ainsi que l'espace libre entre le piston et le corps ou partie fixe du vérin 6.

Ce carter 23 communique avec le carter homologue 23a de l'élément de pompage la. Les carters 23, 23a... des différents éléments contiennent du fluide gazeux dont la pression est notamment adaptée à réduire, voire annuler, les fuites de fluide polyphasique entre la chambre 2 et le carter, et/ou à diminuer l'épaisseur du ou des carters 23, 23a... devant résister à l'éventuelle pression hydrostatique du milieu environnant le dispositif de pompage. Ainsi, en exploitation pétrolière sous-marine, cette pression extérieure peut être celle produite par une colonne d'eau de mer de 1000m de hauteur.

D'une manière souvent très avantageuse, cette pression peut être celle de la conduite d'alimentation, ou celle de la conduite de refoulement.

Le carter peut être relié à, voire traversé par, l'une ou l'autre de ces conduites. Les fuites de fluides entre la chambre 2 et le carter 23 peuvent alors se mélanger avec le fluide pompé ou à pomper.

Le vérin 6 comporte un capteur linéaire de position comportant une partie fixe 40 solidaire du corps du vérin et une partie mobile 41 solidaire de la tige du vérin. Ce capteur de position peut être un capteur à variation d'inductance ou à variation de résistance, ou encore à variation d'inductance mutuelle.

Les capteurs de vitesse, tel le "Digital Linear Deplacement Measuring System" de la société Sacol Powerline, associés à des moyens de traitement électronique des informations, permettent de connaître avec précision la position de la tige 7 du vérin par rapport au cylindre 4 et ainsi donc le volume de la chambre 2 de pompage.

Ces capteurs comportent une partie mobile 41 constituée d'une succession de bobines bouclées et une partie fixe comportant deux bobines d'excitation et une bobine de détection reliées par des fils au système de traitement.

La partie supérieure de la chambre 2 de pompage comporte au capteur 42 de pression à auquel le est soumise le fluide. Le conduit 13 d'alimentation en fluide comporte un capteur 43 de température permettant de contrôler la température initiale du fluide et ainsi de tenir compte de sa modification pour la détermination du GLR ou d'autres paramètres.

Pratiquement, la température des effluents d'un puits pétrolier est constante lorsque la production est constante, et diminue lorsque la production d'effluents croît.

En outre, un capteur 44 de température est disposé dans les orifices d'évacuation 15. Ce capteur 44 permet notamment l'évaluation fine des GLR élevés, en réalisant des corrélations avec des transformations isotherme, adiabatique ou polytropique.

Pour les pompes ayant un organe tournant de pair avec une variation de volume de la chambre, on pourra utiliser un capteur optique de position angulaire.

En production pétrolière marine notamment, la connaissance du GLR au niveau d'une pompe située en amont d'une plateforme de traitement permet d'adapter préalablement l'appareillage de traitement, par exemple, par la mise en service de séparateurs supplémentaires ou par un arrangement différent d'un séparateur plus adapté au fluide d'un certain GLR.

On pourra déterminer l'énergie de pompage pendant la séquence de compression du fluide en mesurant la pression dans le vérin 6. Cette mesure pourra être réalisée en même temps que celle de la course du vérin 6. Pour les pompes entraînées par un moteur électrique, on pourra utiliser un wattmètre pour déterminer cette énergie de pompage.

## Revendications

1. Procédé de mesure pour déterminer en cours de pompage au moins une caractéristique de pompage ou un paramètre d'un fluide ayant au moins une phase liquide et une phase gazeuse, le volume de la phase gazeuse rapporté au volume de la phase liquide définissant un paramètre dit GLR, dans lequel on effectue les étapes suivantes :
- on introduit ledit fluide dans une chambre d'une pompe volumétrique, ladite pompe ayant une pression d'aspiration (Pa), et une pression de refoulement (Pr), ladite chambre ayant un volume (V) variable,
- on produit une variation du volume de ladite chambre,
- on établit préalablement, au moins une relation ou un ensemble de courbes entre des caractéristiques physiques associées à ladite variation de volume et en rapport avec ledit paramètre GLR, lesdites caractéristiques prenant chacune des valeurs au cours de la variation de volume,
- au cours de ladite variation de volume et pour ladite variation de volume on mesure au moins une desdites valeurs d'une desdites caractéristiques,et
- à partir de ladites relation et de ladite valeur mesurée, on détermine d'autres valeurs des caractéristiques en rapport avec ledit paramètre GLR et/ou ledit paramètre GLR.

2. Procédé selon la revendication 1, caractérisé en ce que l'une au moins desdites caractéristiques est choisie parmi :
- une pression (Pc) dans ladite chambre de pompage,
- une énergie (Wc) produisant ladite variation de volume.

3. Procédé selon l'une des revendications 1 et 2, caractérisé en ce qu'on établit ladite relation en réalisant un étalonnage .

4. Procédé selon l'une des revendications 1 à 3, caractérisé en ce qu'on utilise comme pompe volumétrique une pompe à piston.

5. Procédé selon l'une des revendications 1 à 4, caractérisé en ce qu'on mesure ladite pression (Pa) et /ou une température (Ta) d'aspiration et/ou de refoulement de la pompe.

6. Procédé selon l'une des revendications 1 à 5, caractérisé en ce qu'on utilise un dispositif automatique pour mémoriser ladite relation et pour déterminer au moins une desdites valeurs qui n'a pas été mesurée et/ou le paramètre GLR, la détermination étant réalisée par introduction des valeurs mesurées dans ledit dispositif automatique.

7. Procédé selon l'une des revendications 1 à 5, caractérisé en ce que ladite relation est une fonction continue.

8. Procédé selon l'une des revendications 1 à 7, caractérisé en ce que, connaissant les masses volumiques de ladite phase liquide et de ladite phase gazeuse, on détermine le débit massique du fluide transitant dans la chambre de ladite pompe.

9. Procédé selon l'une des revendications 1 à 8, ladite chambre ayant au moins une paroi mobile, caractérisé en ce qu'on détermine le volume de ladite chambre à partir de la position (c) de ladite paroi mobile.

10. Procédé selon l'une des revendications 1 à 9, caractérisé en ce que ladite variation de volume est une diminution de volume.

11. Procédé selon l'une des revendications 2 à 10, caractérisé en ce que pour un volume (Vc) donné de ladite chambre, on mesure ladite valeur associée de La pression (Pc) de manière à déterminer un paramètre représentatif au moins partiellement de la composition fluide, tel le paramètre GLR.

12. Procédé selon l'une des revendications 2 à 11, caractérisé en ce que pour un volume (Vc) donné de la chambre, on mesure la valeur de ladite énergie (Wc) de manière à déterminer un paramètre représentatif au moins partiellement de la composition du fluide, tel ledit paramètre GLR.

13. Procédé selon l'une des revendications 1 à 11, caractérisé en ce que pour une valeur donnée de la pression (Pc) dans ladite chambre, on mesure la valeur du volume (Vc) associé, de manière à déterminer un paramètre représentatif au moins partiellement de la composition du fluide, tel ledit paramètre GLR, et/ou la valeur de l'énergie (Wc) requise pour obtenir ladite valeur donnée de la pression.

14. Dispositif de mesure pour déterminer au moins une caractéristique de pompage ou un paramètre d'un fluide ayant au moins une phase liquide et une phase gazeuse, ledit paramètre étant un paramètre dit GLR qui correspond au rapport du volume de la phase gazeuse au volume de la phase liquide, ledit dispositif comportant une pompe volumétrique (1) de transport du fluide ayant une pression d'aspiration (Pa) et une pression de refoulement (Pr), et comportant une chambre (2) ayant un volume variable et ledit dispositif comportant un dispositif de traitement, comprenant ou capable d'établir et/ou de mémoriser une relation entre des caractéristique de phénomènes physiques associés à ladite variation de volume de la chambre et en rapport avec ledit paramètre GLR ledit dispositif comportant en outre au moins deux des éléments du groupe suivant :
- un capteur (42) de pression (Pc) dans ladite chambre,
- un détecteur adapté à mesurer un travail (Wc) de pompage, et
- des moyens (40,41) permettant de connaître les variations de volume (Vc) de la chambre,
lesdits éléments fournissant chacun une valeur, ladite caractéristique à déterminer étant une caractéristique qui n'est pas mesurée par ledit dispositif, ledit dispositif de traitement permettant de déterminer ladite caractéristique à partir de la valeur fournie par lesdits éléments et de ladite relation.

15. Dispositif selon la revendication 14, ladite chambre ayant au moins une paroi mobile, caractérisé en ce que ledit capteur de volume (Vc) de la chambre est un capteur de position de ladite paroi mobile, ledit capteur de position pouvant etre, soit un capteur linéaire, soit un capteur angulaire.

16. Application du procédé selon l'une des revendications 1 à 13 ou du dispositif selon l'une des revendications 14 et 15 à la détermination des caractéristiques de pompage ou du paramètre dit GLR d'un fluide comportant au moins des hydrocarbures

## Patentansprüche

1. Verfahren zum Messen während des Pumpens wenigstens einer Pumpcharakteristik oder eines Parameters eines Fluids, das wenigstens eine flüssige und eine gasförmige Phase hat, wobei das Volumen der gasförmigen Phase bezogen auf das Volumen der flüssigen Phase einen Parameter, den sog. GLR definiert, bei dem man die folgenden Stufen durchführt:
- man führt dieses Fluid in eine Kammer einer volumetrischen Pumpe ein, wobei diese Pumpe einen Saugdruck (Pa) und einen Förderdruck (Pr) hat, wobei diese Kammer über ein variables Volumen (V) verfügt,
- man ruft eine Veränderung des Volumens dieser Kammer hervor,
- man stellt vorher wenigstens eine Beziehung oder eine Gruppe von Kurven zwischen physikalischen dieser Veränderung des Volumens zugeordneten Charakteristiken, die im Verhältnis mit diesem Parameter GLR stehen, hervor, wobei diese Charakteristiken jeweils Werte während der Volumenveränderung annehmen,
- während dieser Veränderung des Volumens und für diese Veränderung des Volumens mißt man wenigstens einen dieser Werte einer dieser Charakteristiken, und
- ausgehend von dieser Beziehung und von diesem gemessenen Wert bestimmt man andere Werte der Charakteristiken im Verhältnis zu diesem Parameter GLR und/oder diesen Parameter GLR.

2. Verfahren nach Anspruch 1, dadurch gekennzeichnet, daß wenigstens eine dieser Charakteristiken gewählt ist aus:
- einem Druck (Pc) in dieser Pumpkammer,
- einer diese Volumenveränderung erzeugenden Energie (Wc).

3. Verfahren nach einem der Ansprüche 1 und 2, dadurch gekennzeichnet, daß man diese Beziehung herstellt, indem man eine Eichung durchführt.

4. Verfahren nach einem der Ansprüche 1 bis 3, dadurch gekennzeichnet, daß man als volumetrische Pumpe eine Kolbenpumpe benutzt.

5. Verfahren nach einem der Ansprüche 1 bis 4, dadurch gekennzeichnet, daß man diesen Druck (Pa) und/oder eine Temperatur (Ta) der Ansaugung und/oder beim Förderdruck der Pumpe mißt.

6. Verfahren nach einem der Ansprüche 1 bis 5, dadurch gekennzeichnet, daß man eine automatische Vorrichtung benutzt, um diese Beziehung zu speichern und wenigstens einen dieser Werte, der nicht gemessen wurde, und/oder den Parameter GLR zu bestimmen, wobei die Bestimmung durch Einführung der gemessenen Werte in diese automatische Vorrichtung realisiert wird.

7. Verfahren nach einem der Ansprüche 1 bis 5, dadurch gekennzeichnet, daß diese Beziehung eine kontinuierliche Funktion ist.

8. Verfahren nach einem der Ansprüche 1 bis 7, dadurch gekennzeichnet, daß bei Kenntnis der volumetrischen Massen dieser flüssigen Phase und dieser gasförmigen Phase man diesen spezifischen Massendurchsatz des Fluids, der in die Kammer der Pumpe übergeht, bestimmt.

9. Verfahren nach einem der Ansprüche 1 bis 8, wobei diese Kammer wenigstens eine bewegliche Wandung hat, dadurch gekennzeichnet, daß man das Volumen dieser Kammer ausgehend von der Position (c) dieser beweglichen Wandung bestimmt.

10. Verfahren nach einem der Ansprüche 1 bis 9, dadurch gekennzeichnet, daß diese Volumenveränderung eine Volumenverminderung ist.

11. Verfahren nach einem der Ansprüche 2 bis 10, dadurch gekennzeichnet, daß für ein gegebenes Volumen (Vc) dieser Kammer man diesen dem Druck (Pc) zugeordneten Wert derart mißt, daß man einen wenigstens teilweise für die Fluidzusammensetzung repräsentativen Parameter wie den Parameter GLR mißt.

12. Verfahren nach einem der Ansprüche 2 bis 11, dadurch gekennzeichnet, daß für ein gegebenes Volumen (Vc) der Kammer man den Wert dieser Energie (Wc) derart mißt, daß ein wenigstens teilweise für die Zusammensetzung dieses Fluids repräsentativer Parameter, wie beispielsweise der Parameter GLR, bestimmt wird.

13. Verfahren nach einem der Ansprüche 1 bis 11, dadurch gekennzeichnet, daß für einen gegebenen Wert des Drucks (Pc) in dieser Kammer man den Wert des zugeordneten Volumens (Vc) derart mißt, daß ein wenigstens teilweise für die Zusammensetzung des Fluids repräsentativer Parameter, beispielsweise der Parameter GLR, und/oder der Wert der Energie (Wc), die erforderlich ist, um diesen gegebenen Wert des Druckes zu erhalten, bestimmt wird.

14. Meßvorrichtung zur Bestimmung wenigstens einer Pumpcharakteristik oder eines Parameters eines Fluids, das wenigstens eine flüssige Phase und eine gasförmige Phase hat, wobei dieser Parameter ein Parameter der sog. GLR ist, der dem Verhältnis des Volumens der gasförmigen Phase zum Volumen der flüssigen Phase entspricht, wobei die Vorrichtung eine volumetrische Pumpe (1) zum Transport des Fluids umfaßt, die einen Saugdruck (Pa) und einen Förderdruck (Pr) hat und eine Kammer (2) mit einem variablen Volumen umfaßt und diese Vorrichtung eine Behandlungseinrichtung umfaßt, die umfaßt oder in der Lage ist herzustellen und/oder zu speichern eine Beziehung zwischen Charakteristiken physikalischer Phänomene, die dieser Veränderung des Volumens der Kammer zugeordnet sind und in Beziehung mit diesem Parameter GLR stehen, wobei die Vorrichtung im übrigen wenigstens zwei Elemente der folgenden Gruppe umfaßt:
- einen Geber (42) für Druck (Pc) in diese Kammer,
- einen Detektor, der so ausgelegt ist, eine Pumparbeit (Wc) zu messen, und
- Mittel (41, 42), die es ermöglichen, die Volumenänderungen (Vc) der Kammer zu erkennen,
wobei diese Elemente jeweils einen Wert liefern, die zu bestimmende Charakteristik eine Charakteristik ist, die nicht durch diese Vorrichtung gemessen wurde und die Behandlungseinrichtung es ermöglicht, diese Charakteristik ausgehend von dem Wert zu bestimmen, der durch diese Elemente und diese Beziehung geliefert wurde.

15. Vorrichtung nach Anspruch 14, wobei diese Kammer wenigstens eine bewegliche Wandung hat, dadurch gekennzeichnet, daß dieser Volumengeber (Vc) der Kammer ein Positionsgeber dieser beweglichen Wand ist und der Positionsgeber entweder ein linearer Geber oder ein Winkelgeber sein kann.

16. Anwendung des Verfahrens nach einem der Ansprüche 1 bis 13 oder der Vorrichtung nach einem der Ansprüche 14 und 15 auf die Bestimmung der Pumpcharakteristiken oder des sog. GLR Parameters eines Fluids, welches wenigstens Kohlenwasserstoffe umfaßt.

## Claims

1. Measuring method for determining during pumping at least one pumping characteristic or a parameter of a fluid having at least one liquid phase and one gaseous phase, the volume of the gaseous phase in relation to the liquid phase being used to define a parameter known as GLR, in which the following steps are carried out:
- the said fluid is introduced into a chamber of a positive displacement pump, the said pump having a suction pressure (Pa) and a delivery pressure (Pr), the said chamber having a variable volume (V),
- a variation in the volume of the said chamber is produced,
- at least one relationship between or a set of curves for the physical characteristics associated with the said variation in volume and in relation to the said GLR parameter is established beforehand, the said characteristics each assuming values during the variation in volume,
- during the said variation in volume and for the said variation in volume or measurement, at least one of the said values of one of the said characteristics is measured,
- using the said relationship and the said measured value, other values of characteristics are determined in relation to the said GLR parameter and/or the said GLR parameter.

2. Method as claimed in claim 1, characterised in that at least one of the said characteristics is selected from:
- a pressure (Pc) in the said pumping chamber,
- the energy (Wc) producing the said variation in volume.

3. Method as claimed in claims 1 and 2, characterised in that the said relationship is established by calibration.

4. Method as claimed in one of claims 1 to 3, characterised in that a piston pump is used as a positive displacement pump.

5. Method as claimed in one of claims 1 to 4, characterised in that the said suction and/or delivery pressure (Pa) and/or temperature (Ta) of the pump are measured.

6. Method as claimed in one of claims 1 to 5, characterised in that an automatic device is used to store in memory the said relationship and to determine at least one of the said values that has not been measured and/or the GLR parameter, this calculation being done by entering the measured values into the automatic device.

7. Method as claimed in one of claims 1 to 5, characterised in that the said relationship is a continuous function.

8. Method as claimed in one of claims 1 to 7, characterised in that, since the masses per unit volume of the said liquid phase and the said gaseous phase are known, the flow rate per unit volume of the fluid passing through the chamber of the said pump is determined.

9. Method as claimed in one of claims 1 to 8, the chamber having at least one movable wall, characterised in that the volume of the said chamber is determined on the basis of the position (c) of the said movable wall.

10. Method as claimed in one of claims 1 to 9, characterised in that the said variation in volume is a reduction in volume.

11. Method as claimed in one of claims 2 to 10, characterised in that for a given volume (Vc) of the said chamber, the said associated value for pressure (Pc) is measured so as to determine a parameter that is at least partially representative of the composition of the fluid, such as the GLR parameter.

12. Method as claimed in one of claims 2 to 11, characterised in that for a given volume (Vc) of the chamber, the value of the said energy (Wc) is measured in order to determine a parameter that is at least partially representative of the composition of the fluid, such as the said GLR parameter.

13. Method as claimed in one of claims 1 to 11, characterised in that for a given value of pressure (Pc) in the said chamber, the value of the associated volume (Vc) is measured in order to determine a parameter that is at least partially representative of the composition of the fluid, such as the GLR parameter and/or the energy value (Wc) required to obtain the said given pressure value.

14. Measuring device for determining at least one pumping characteristic or a parameter of a fluid having at least one liquid phase and one gaseous phase, the said parameter being a parameter known as GLR which corresponds to the ratio of the volume of the gaseous phase to the volume of the liquid phase, the said device comprising a positive displacement pump (1) for conveying fluids, having a section pressure (Pa) and a delivery pressure (Pr) and having a chamber (2) with variable volume, and the said device having a processing device with a memory or capable of storing a relationship between the characteristics of physical phenomena associated with the said variation in the volume of the chamber and in relation to the said GLR parameter, the said device having in addition at least two elements from the following group:
- a sensor (42) for sensing the pressure (Pc) of the said chamber
- a detector designed to measure the pumping work rate (Wc),
- means (40, 41) enabling the variations in volume (Vc) of the chamber to be ascertained,
the said elements each supplying a value, the said characteristic to be determined being a characteristic which has not been measured by the said device, the said processing device enabling the said characteristic to be determined on the basis of the value supplied by the said elements and the said relationship.

15. Device as claimed in claim 14, the said chamber having at least one movable wall, characterised in that the said sensor sensing the volume (Vc) of the chamber is a sensor that detects the position of the said movable wall, the said position sensor being possibly a linear sensor or an angular sensor.

16. Application of the method as claimed in one of claims 1 to 13 or of the device as claimed in one of claims 14 and 15 to determining the pumping characteristics or the parameter known as GLR of a fluid containing at least hydrocarbons.
